# EUROPEAN PATENT SPECIFICATION

(11) **EP 1 883 166 B1**
(45) Date of publication and mention of the grant of the patent: **01.08.2012**
(21) Application number: 06756571.3
(22) Date of filing: 18.05.2006
(51) Int. Cl.: H04B 1/7117

(54) **PATH SEARCH PROCESSING CIRCUIT, PATH SEARCH METHOD AND CONTROL PROGRAM**
VERARBEITUNGSSCHALTUNG UND VERFAHREN ZUR PFADSUCHE SOWIE STEUERPROGRAMM DAFÜR
CIRCUIT DE TRAITEMENT DE RECHERCHE DE CHEMIN, MÉTHODE DE RECHERCHE DE CHEMIN ET PROGRAMME DE COMMANDE

(30) Priority: 18.05.2005 JP 2005145543
(43) Date of publication of application: 30.01.2008
(73) Proprietor: NEC Corporation, Minato-ku Tokyo 108-8001 (JP)
(72) Inventor: TAMURA, Koichi, Minato-ku, Tokyo 108-8001 (JP)
(74) Representative: Vossius & Partner
(86) International application number: PCT/JP2006/310411
(87) International publication number: WO 2006/123832

(56) References cited:
- EP-A1- 1 450 496
- WO-A1-01/97423
- WO-A1-97/28608
- JP-A- 2000 082 973
- JP-A- 2003 158 474
- JP-A- 2003 332 944
- US-A1- 2001 010 703

## Description

The present invention relates to a path search processing circuit, a path search method, and a control program in a CDMA (Code Division Multiple Access) mobile communication demodulator circuit.

In a radio communication, signals transmitted from a transmitter are subjected to fading caused by movement of the transmitter or a receiver, diffraction or attenuation caused by a shield, and the like. The receiver receives a plurality of signals (multipath).

Here, communication methods of a radio communication include TDMA (Time Division Multiple Access), FDMA (Frequency Division Multiple Access), CDMA, and the like. In TDMA and FDMA, when one signal of the multipath is to be received, other signals are noises interfering with the signal to be received. In CDMA, a multipath is separated into individual paths, which are assigned to fingers. Rake synthesis is performed on the assigned signals of the multipath by a receiver, so that the signals of all of the paths are processed as signals to be received. These operations are performed to increase the receiving sensitivity. This process of separating a multipath, obtaining timing of each path, and assigning those timings to fingers is referred to as a path search process. Various proposals have been made with regard to the path search process.

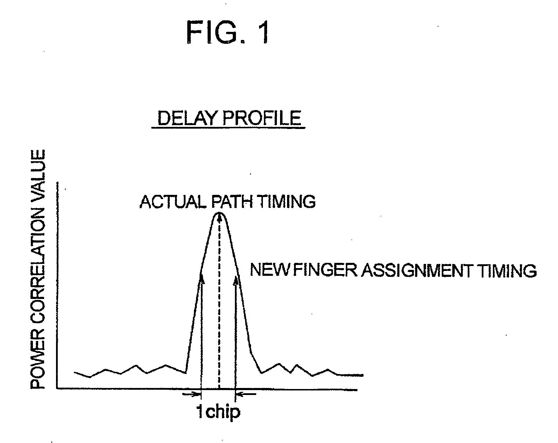

For example, the prior art reference (JP 1998-308689A, pp. 4-7, Figure 1) discloses a receiver used in a spread spectrum communication as shown in FIG. 1, the receiver having spread code generating means for generating a spread code and demodulation means for demodulating a received signal so as to output a demodulated signal outputted from the demodulation means as demodulation data. This receiver is configured to control assignment such as to have intervals of 1 chip between finger assignment timings in order to prevent the same path from being assigned to a plurality of fingers.

WO 97/28608 A1 and US 2001/010703 A relate to the technological background.

### Problems to be solved by the invention:

As described above, the path diversity effect can be obtained by path search and rake synthesis in a CDMA mobile communication demodulator circuit. Accordingly, separation of a path, i.e., detection of path timings is an important technology for maintaining good receiving characteristics.

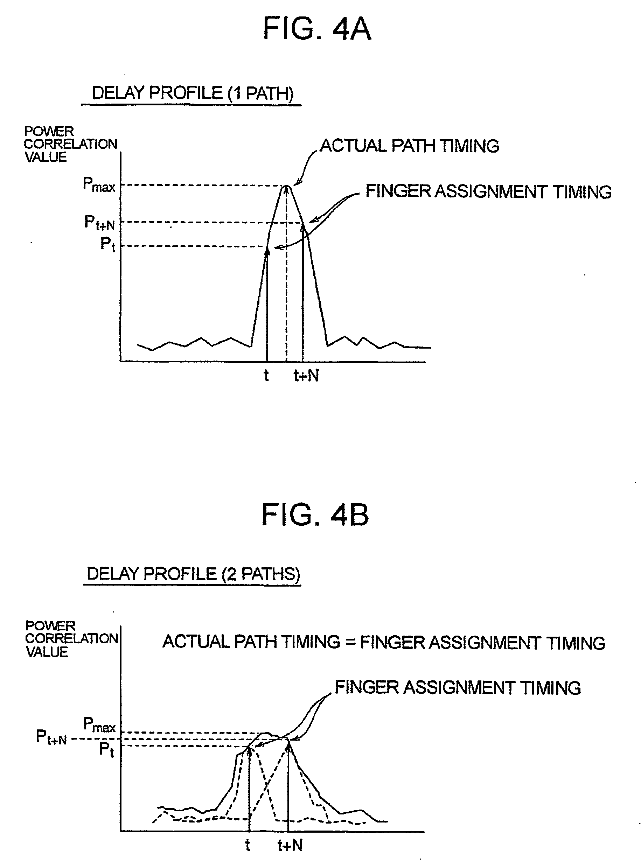

However, path timings vary with time in a mobile communication. Accordingly, it may be difficult to separate paths when path timings are brought close to each other. For example, in a case where actual path timings and finger assignment are as shown in FIG. 4B, the actual path timings may not be assigned to the fingers even if the method disclosed in the aforementioned prior art reference is performed.

Paths that have not been subjected to path search become interference components for a receiver and deteriorate the receiving characteristics. Accordingly, high-precision path search is necessary to maintain good receiving characteristics. Particularly, a high-speed data communication such as HSDPA (High Speed Downlink Packet Access) is likely to be influenced by interference, and the receiving characteristics are significantly deteriorated. Accordingly, there have been desired a path search processing circuit and a path search method capable of high-precision path search.

The present invention has been made in view of the above drawbacks. It is, therefore, a primary object of the present invention to propose a path search processing circuit, a path search method, and a control program capable of detecting an appropriate path timing even if a plurality of path timings are brought close to each other under a multipath environment in a CDMA mobile communication demodulator circuit. This object is achieved with the features of the claims.

Thus, according to the present invention, path timings to be controlled are specified based on a difference between adjacent path timings. Furthermore, according to the present invention, suitability of assignment of the path timings is determined based on power correlation values of the path timings determined to be controlled and a maximum power correlation value between those timings. The assignment of the path timings is changed based on the results. Accordingly, even if a plurality of path timings are brought close to each other in a multipath environment, it is possible to detect appropriate path timings. Thus, it is possible to reduce deterioration of the receiving characteristics and reduce electric power consumption.

According to a path search processing circuit, a path search method, and a control program in a CDMA mobile communication demodulator circuit of the present invention, the following effects can be attained.

According to the present invention, finger assignment timings are controlled by comparing power correlation values of path timings assigned to fingers with a maximum power correlation value between those path timings. Therefore, it is possible to reduce deterioration of the receiving characteristics which would be caused by erroneous finger assignment.

Furthermore, according to the present invention, in a control of the finger assignment timings, path timings to be controlled are specified by comparing a difference between adjacent path timings with a predetermined threshold value. Therefore, it is possible to reduce deterioration of the receiving characteristics which would be caused by control determination errors.

Moreover, according to the present invention, path assignment errors to the fingers are reduced by the aforementioned control of the finger assignment timings. Therefore, it is possible to reduce electric power consumption without any extra finger operations.

The invention is further disclosed with reference to the drawings:
FIG. 1 is a diagram showing an example of a delay profile in the prior art reference;
FIG. 2 is a diagram showing an arrangement of a CDMA mobile communication demodulator circuit according to an embodiment of the present invention;
FIG. 3 is a flow chart showing a path search operation using a demodulator circuit according to an embodiment of the present invention;
FIG. 4A is a diagram showing an example of a delay profile (1 path) according to an embodiment of the present invention; and
FIG. 4B is a diagram showing an example of a delay profile (2 paths) according to an embodiment of the present invention.

Embodiments of the present invention will be described below. As described in Background Art, since path timings vary with time in a mobile communication, a delay path profile, which represents power correlation values with respect to a delay time of a signal, becomes a 1-path state as shown in FIG. 4A or a multipath state as shown in FIG. 4B. Since a conventional mobile communication system cannot discriminate between those states, appropriate path timings cannot be assigned to fingers. Accordingly, good receiving characteristics cannot be obtained. Furthermore, extra fingers are operated by erroneously assigned paths. Such extra operation increases electric power consumption.

According to the present invention, a CDMA mobile communication demodulator circuit is provided with a path timing comparison part operable to compare a difference between adjacent path timings with a predetermined threshold value, a path level comparison part operable to detect a maximum power correlation value between a pair of path timings determined to be controlled with reference to a delay profile and compare power correlation values of the path timings with the maximum power correlation value, and a path timing determination part operable to control finger assignment timings based on the comparison results. With this configuration, finger assignment timings are adaptively controlled in accordance with a power correlation peak value obtained by the delay profile calculation.

Specifically, the mobile communication demodulator circuit having the above arrangement compares power correlation values Pt and Pt+N of finger assignment timings (t, t+N) with a maximum value of power correlation values between these finger assignment timings (t+1 to t+N-1), determines that the resultant delay profile has a 1-path state as shown in FIG. 4A or a multipath state as shown in FIG. 4B, and adaptively controls the finger assignment timings depending upon the path state.

Thus, by adaptively controlling finger assignment timings with use of power correlation values near the finger assignment timings, good receiving characteristics can be maintained even if there are paths having receiving timings close to each other. Simultaneously, electric power consumption can be reduced by reducing erroneous path assignments to the fingers.

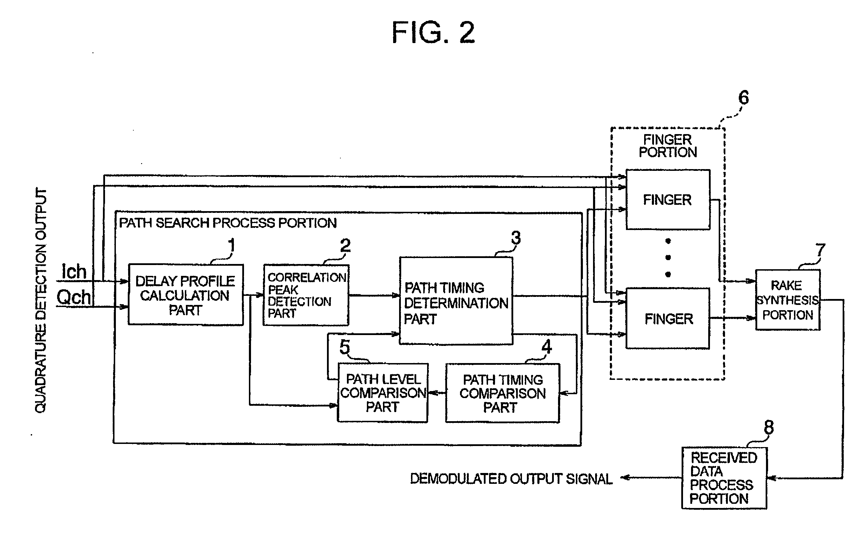

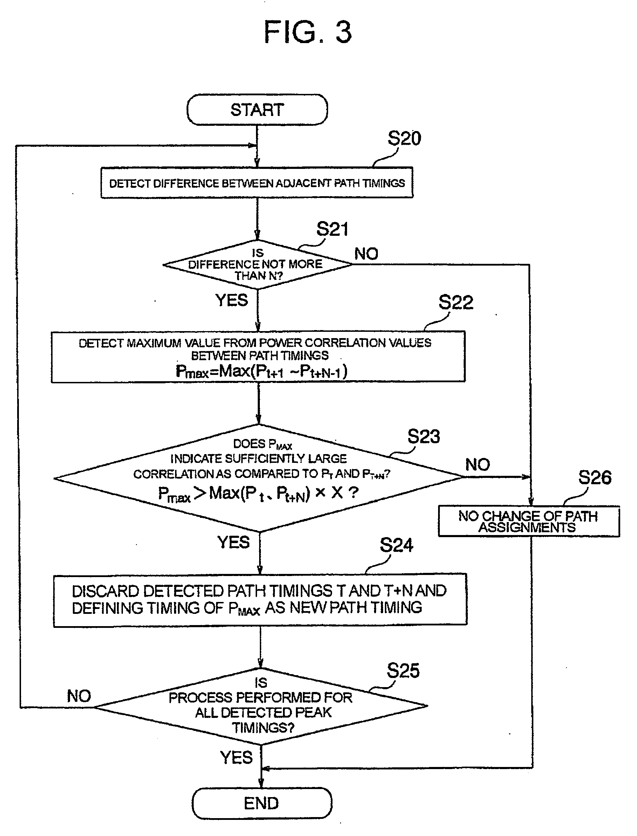

A path search processing circuit, a path search method, and a control program in a CDMA mobile communication demodulator circuit will be described in detail with reference to FIGS. 2 to 4. FIG. 2 is a block diagram showing an arrangement of a demodulator circuit coping with a demodulation method using general finger/rake, and FIG. 3 is a flow chart showing a path search method using this demodulator circuit. Furthermore, FIGS. 4A and 4B are diagrams showing delay profile examples. FIG 4A shows a 1-path state, whereas FIG. 4B shows a multipath state.

As shown in FIG. 2, the demodulator circuit in the present embodiment has a path search process portion including a delay profile calculation part 1, a correlation peak detection part 2, a path timing determination part 3, a path timing comparison part 4, and a path level comparison part 5, a finger portion 6 including a plurality of fingers, a rake synthesis portion 7 for performing a rake synthesis process, and a received data process portion 8 for performing a demodulation process.

The path timing comparison part 4 and the path level comparison part 5 of the path search process portion may be implemented by hardware. Furthermore, a computer may be configured to function as the path timing comparison part 4 and the path level comparison part 5 by a control program, and this control program may be operated on the demodulator circuit.

Operation of the demodulator circuit will be described. An I-component signal and a Q-component signal that have been subjected to quadrature detection and demodulation are inputted to the delay profile calculation part 1. Coherent addition and power addition are performed in the delay profile calculation part 1 so as to produce an averaged delay profile. Peak search of the delay profile calculated by the delay profile calculation part 1 is performed in the correlation peak detection part 2. The path timing determination part 3 assigns a path timing corresponding to the peak to the fingers so that a path position having a high power correlation value is used as a finger assignment path position. The finger portion 6 performs back-diffusion on the paths assigned to the respective fingers. Rake synthesis is performed on the outputs of the finger portion 6 by the rake synthesis portion 7. The rake synthesis signal produced by the rake synthesis is demodulated by the received data process portion 8 and outputted as a demodulated output signal.

The path timings assigned to the fingers by the path timing determination part 3 are fed back to the path timing comparison part 4. The path timing comparison part 4 compares a difference between the path timings assigned to the fingers with a preset threshold value. The finger assignment timings that have been determined to be controlled based on the comparison results are compared with the power correlation value near the finger assignment timings by the path level comparison part 5. If the path timing determination part 3 determines based on the comparison results that the current path timing is not proper, then it assigns a new path timing to the fingers.

The method of determining whether to perform the control will be described below. The path timing comparison part 4 determines whether a pair of path timings having a small difference therebetween is included in the finger assignment timings. The path level comparison part 5 compares the power correlation values of the path timings determined to have a small difference therebetween with a power correlation value between those path timings. If the power correlation value of the path timing not assigned to the fingers is larger than the power correlation values of the finger assignment timings by at least a predetermined threshold value, then the current finger assignment timings are determined to be assigned to a base of a delay profile. In this case, the path timing determination part 3 discards the current finger assignment timings, which have been determined to be controlled, and newly assigns the path timing that has indicated a power correlation value larger by at least the threshold value to the fingers. The threshold value to which the path timing comparison part 4 refers and the threshold value to which the path level comparison part 5 refers are not limited to specific values and can be set to be any values suitable for the performance required for the demodulator circuit. Additionally, control determination errors can further be reduced by using guard levels for determining whether to perform the control. However, the guard levels are well-known art and will not be described in detail.

Next, the path search operation performed in the path timing determination part 3, the path timing comparison part 4, and the path level comparison part 5 will be described with reference to a flow chart of FIG. 3.

First, the path timing comparison part 4 detects a difference between adjacent path timings of the path timings assigned to the fingers (Step S20). Furthermore, the path timing comparison part 4 makes a comparison to determine whether the difference is not more than a predetermined threshold value N (Step S21).

If the difference between the adjacent path timings is not more than N (YES in Step S21), then the two finger assignment timings are determined to have a possibility of being assigned to a base of a delay profile of the same receiving path as shown in FIG. 4. Then a comparison of path levels, which will be described later, is performed. On the other hand, if the difference between the adjacent path timings is larger than N (No in Step 21), then it is determined that different paths are assigned to the fingers. The path assignments are not changed (Step S26), and the process is terminated.

The method of comparing the path levels will be described below. The path level comparison part 5 detects a maximum power correlation value Pmax between the target finger assignment path timings (t and t+N in FIG. 4) from the output of the delay profile calculation part 2 (Step S22). Furthermore, the path level comparison part 5 multiplies a larger level Max(Pt, Pt+N) of power correlation values Pt and Pt+N at the target finger assignment path timings by a predetermined threshold value X (X >= 1) and makes a level comparison between Pmax and Max(Pt, Pt+N)×X (Step S23).

As a result of the level comparison, if Pmax is larger than Max(Pt, Pt+N)×X (YES in Step S23), then the path timing determination part 3 determines that the target finger assignment path timings (t and t+N in FIG. 4) are assigned to the base of the delay profile of the same receiving path as shown in FIG. 4A and determines that an actual path timing is a timing at which Pmax is detected. Then the path timing determination part 3 excludes the target finger assignment path timings t and t+N from the finger assignments and newly assigns the timing at which Pmax is detected to the fingers (Step S24). On the other hand, if Max(Pt, Pt+N)×X is larger than Pmax (No in Step S23), then the path timing determination part 3 determines that two paths have been received at close timings as shown in FIG. 4B and assigns the target finger assignment path timings t and t+N to the fingers.

Finally, comparison and determination are performed for all of the finger assignment timings in accordance with the above steps (Step S25).

Thus, the path timing comparison part 4 compares a difference between path timings assigned to fingers with a predetermined threshold value. With regard to path timings that have been determined to be controlled, the path level comparison part 5 detects a maximum power correlation value between the finger assignment timings and compares a power correlation value of each finger assignment timing with the maximum power correlation value. If the path timing determination part 3 determines based on the comparison results that the current path timings are not appropriate, then it operates to assign a new path timing to the fingers. Accordingly, even if a plurality of path timings are brought close to each other in a multipath environment, appropriate path timings can be detected to thereby reduce deterioration of the receiving characteristics and reduce electric power consumption.

### Industrial applicability:

The present invention is applicable to any communication devices using CDMA, such as a cellular phone terminal and a portable terminal device.

## Claims

1. A path search processing circuit for a CDMA mobile communication demodulator circuit for assigning a received signal at predetermined path timings to fingers (6), synthesizing signals subjected to back-diffusion by the fingers, demodulating the synthesized signal, and outputting the demodulated signal, **characterized by** comprising:
first means (3) that specifies path timings to be controlled based on a difference between adjacent path timings; and
second means (1) that refers to a delay profile indicative of a distribution of power correlation values with respect to a delay time of a signal, detects a maximum power correlation value between the path timings, and determines suitability of assignment of the path timings based on power correlation values of the respective path timings and the maximum power correlation value.

2. The path search processing circuit as recited in claim 1,
**characterized in that**:
the first means (3) specifies the adjacent path timings as path timings to be controlled when the difference between the adjacent path timings is smaller than a predetermined threshold value, and
the second means (1) determines that assignment of the path timings is not appropriate when the maximum power correlation value is larger than a value obtained by multiplying a larger power correlation value of the power correlation values of the respective path timings by a predetermined threshold value.

3. A path search method in a CDMA mobile communication demodulator circuit for assigning a received signal at predetermined path timings to fingers, synthesizing signals subjected to back-diffusion by the fingers, demodulating the synthesized signal, and outputting the demodulated signal, **characterized by** comprising:
a first step of specifying path timings to be controlled based on a difference between adjacent path timings; and
a second step of referring to a delay profile indicative of a distribution of power correlation values with respect to a delay time of a signal, detecting a maximum power correlation value between the path timings, and determining suitability of assignment of the path timings based on power correlation values of the respective path timings and the maximum power correlation value.

4. The path search method as recited in claim 3, **characterized in that**:
the first step includes a step of specifying the adjacent path timings as path timings to be controlled when the difference between the adjacent path timings is smaller than a predetermined threshold value, and
the second step includes a step of determining that assignment of the path timings is not appropriate when the maximum power correlation value is larger than a value obtained by multiplying a larger power correlation value of the power correlation values of the respective path timings by a predetermined threshold value.

5. A control program operable in a CDMA mobile communication demodulator circuit for assigning a received signal at predetermined path timings to fingers, synthesizing signals subjected to back-diffusion by the fingers, demodulating the synthesized signal, and outputting the demodulated signal, the control program **characterized by** executing, with a computer, the steps of:
a first step of specifying path timings to be controlled based on a difference between adjacent path timings; and
a second step of referring to a delay profile indicative of a distribution of power correlation values with respect to a delay time of a signal, detecting a maximum power correlation value between the path timings, and determining suitability of assignment of the path timings based on power correlation values of the respective path timings and the maximum power correlation value.

6. The control program as recited in claim 5, **characterized in that**:
the first step includes a step of specifying the adjacent path timings as path timings to be controlled when the difference between the adjacent path timings is smaller than a predetermined threshold value, and
the second step includes a step of determining that assignment of the path timings is not appropriate when the maximum power correlation value is larger than a value obtained by multiplying a larger power correlation value of the power correlation values of the respective path timings by a predetermined threshold value.

## Patentansprüche

1. Pfadsuch-Verarbeitungsschaltung für eine CDMA-Mobilkommunikations-Demodulatorschaltung zum Zuweisen eines empfangenen Signals zu vorgegebenen Pfadzeiten zu Fingern (6), zum Synthetisieren von Signalen, die einer Rückdiffusion durch die Finger unterliegen, zum Demodulieren des synthetisierten Signals und zum Ausgeben des demodulierten Signals,
**gekennzeichnet durch**:
eine erste Einrichtung (3), welche Pfadzeiten spezifiziert, die auf der Grundlage einer Differenz zwischen benachbarten Pfadzeiten zu steuern sind, und
eine zweite Einrichtung (1), welche sich auf ein Verzögerungsprofil bezieht, das eine Verteilung von Leistungskorrelationswerten in Bezug auf eine Verzögerungszeit eines Signals angibt, einen maximalen Leistungskorrelationswert zwischen den Pfadzeiten detektiert und die Eignung der Zuweisung der Pfadzeiten auf der Grundlage von Leistungskorrelationswerten der jeweiligen Pfadzeiten und des maximalen Leistungskorrelationswerts bestimmt.

2. Pfadsuch-Verarbeitungsschaltung nach Anspruch 1,
**dadurch gekennzeichnet, dass**:
die erste Einrichtung (3) die benachbarten Pfadzeiten als Pfadzeiten spezifiziert, die zu steuern sind, wenn die Differenz zwischen den benachbarten Pfadzeiten kleiner als ein vorgegebener Schwellenwert ist, und
die zweite Einrichtung (1) feststellt, dass die Zuweisung der Pfadzeiten nicht geeignet ist, wenn der maximale Leistungskorrelationswert größer als ein Wert ist, der durch Multiplizieren eines größeren Leistungskorrelationswerts der Leistungskorrelationswerte der jeweiligen Pfadzeiten mit einem vorgegebenen Schwellenwert erhalten wird.

3. Pfadsuchverfahren in einer CDMA-Mobilkommunikations-Demodulatorschaltung zum Zuweisen eines empfangenen Signals zu vorgegebenen Pfadzeiten zu Fingern, zum Synthetisieren von Signalen, die einer Rückdiffusion durch die Finger unterliegen, zum Demodulieren des synthetisierten Signals und zum Ausgeben des demodulierten Signals,
**gekennzeichnet durch**:
einen ersten Schritt zum Spezifizieren von Pfadzeiten, die zu steuern sind, auf der Grundlage einer Differenz zwischen benachbarten Pfadzeiten, und
einen zweiten Schritt zum Bezugnehmen auf ein Verzögerungsprofil, das eine Verteilung von Leistungskorrelationswerten in Bezug auf eine Verzögerungszeit eines Signals angibt, zum Erfassen des maximalen Leistungskorrelationswerts zwischen den Pfadzeiten und zum Bestimmen der Eignung der Zuweisung der Pfadzeiten auf der Grundlage von Leistungskorrelationswerten der jeweiligen Pfadzeiten und des maximalen Leistungskorrelationswerts.

4. Pfadsuchverfahren nach Anspruch 3,
**dadurch gekennzeichnet, dass**:
der erste Schritt aufweist: einen Schritt zum Spezifizieren der benachbarten Pfadzeiten als Pfadzeiten, die zu steuern sind, wenn die Differenz zwischen den benachbarten Pfadzeiten kleiner als ein vorgegebener Schwellenwert ist, und
der zweite Schritt aufweist: einen Schritt zum Feststellen, dass die Zuweisung der Pfadzeiten nicht geeignet ist, wenn der maximale Leistungskorrelationswert größer als ein Wert ist, der durch Multiplizieren eines größeren Leistungskorrelationswerts der Leistungskorrelationswerte der jeweiligen Pfadzeiten mit einem vorgegebenen Schwellenwert erhalten wird.

5. Steuerprogramm, das in einer CDMA-Mobilkommunikations-Demodulatorschaltung einsetzbar ist zum Zuweisen eines empfangenen Signals zu vorgegebenen Pfadzeiten zu Fingern, zum Synthetisieren von Signalen, die einer Rückdiffusion durch die Finger unterliegen, zum Demodulieren des synthetisierten Signals und zum Ausgeben des demodulierten Signals,
**dadurch gekennzeichnet, dass** das Steuerprogramm mit einem Computer folgende Schritte ausführt:
einen ersten Schritt zum Spezifizieren von Pfadzeiten, die auf der Grundlage einer Differenz zwischen benachbarten Pfadzeiten zu steuern sind, und
einen zweiten Schritt zum Bezugnehmen auf ein Verzögerungsprofil, das eine Verteilung von Leistungskorrelationswerten in Bezug auf eine Verzögerungszeit eines Signals angibt, zum Erfassen eines maximalen Leistungkorrelationswerts zwischen den Pfadzeiten und zum Bestimmen der Eignung der Zuweisung der Pfadzeiten auf der Grundlage von Leistungskorrelationswerten der jeweiligen Pfadzeiten und des maximalen Leistungskorrelationswerts.

6. Steuerprogramm nach Anspruch 5,
**dadurch gekennzeichnet, dass**:
der erste Schritt aufweist: einen Schritt zum Spezifizieren der benachbarten Pfadzeiten als Pfadzeiten, die zu steuern sind, wenn die Differenz zwischen den benachbarten Pfadzeiten kleiner als ein vorgegebener Schwellenwert ist, und
der zweite Schritt aufweist: einen Schritt zum Feststellen, dass die Zuweisung der Pfadzeiten nicht geeignet ist, wenn der maximale Leistungskorrelationswert größer als ein Wert ist, der durch Multiplizieren eines größeren Leistungskorrelationswerts der Leistungskorrelationswerte der jeweiligen Pfadzeiten mit einem vorgegebenen Schwellenwert erhalten wird.

## Revendications

1. Circuit de traitement de recherche de chemin d'un circuit démodulateur de communication mobile à accès CDMA destiné à affecter un signal reçu, à des temporisations de chemins prédéterminées, à des doigts (6), à synthétiser des signaux soumis à une rétrodiffusion par les doigts, à démoduler le signal synthétisé, et à générer en sortie le signal démodulé, **caractérisé en ce qu'**il comporte :
un premier moyen (3) qui spécifie des temporisations de chemins destinées à être commandées sur la base d'une différence entre des temporisations de chemins adjacents ; et
un second moyen (1) qui fait référence à un profil de retard indiquant une distribution de valeurs de corrélation de puissances relativement à un temps de retard d'un signal, détecte une valeur de corrélation de puissances maximale entre les temporisations de chemins, et détermine une pertinence d'affectation des temporisations de chemins sur la base de valeurs de corrélation de puissances des temporisations de chemins respectives et de la valeur de corrélation de puissances maximale.

2. Circuit de traitement de recherche de chemin selon la revendication 1, caractérisé en ce qui :
le premier moyen (3) spécifie les temporisations de chemins adjacents en qualité de temporisations de chemins à contrôler lorsque la différence entre les temporisations de chemins adjacents est inférieure à une valeur seuil prédéterminée ; et
le second moyen (1) détermine qu'une affectation des temporisations de chemins n'est pas pertinente lorsque la valeur de corrélation de puissances maximale est supérieure à une valeur obtenue en multipliant une valeur de corrélation de puissances supérieure des valeurs de corrélation de puissances des temporisations de chemins respectives par une valeur seuil prédéterminée.

3. Procédé de recherche de chemins dans un circuit démodulateur de communication mobile à accès CDMA destiné à affecter un signal reçu, à des temporisations de chemins prédéterminées, à des doigts, à synthétiser des signaux soumis à une rétrodiffusion par les doigts, à démoduler le signal synthétisé, et à générer en sortie le signal démodulé, **caractérisé en ce qu'**il comporte :
une première étape consistant à spécifier des temporisations de chemins destinées à être commandées sur la base d'une différence entre des temporisations de chemins adjacents ; et
une seconde étape consistant à faire référence à un profil de retard indiquant une distribution de valeurs de corrélation de puissances relativement à un temps de retard d'un signal, à détecter une valeur de corrélation de puissances maximale entre les temporisations de chemins, et à déterminer une pertinence d'affectation des temporisations de chemins sur la base de valeurs de corrélation de puissances des temporisations de chemins respectives et de la valeur de corrélation de puissances maximale.

4. Procédé de recherche de chemins selon la revendication 3, caractérisé en ce qui :
la première étape comporte une étape consistant à spécifier les temporisations de chemins adjacents en qualité de temporisations de chemins à contrôler lorsque la différence entre les temporisations de chemins adjacents est inférieure à une valeur seuil prédéterminée ; et
la seconde étape comporte une étape consistant à déterminer qu'une affectation des temporisations de chemins n'est pas pertinente lorsque la valeur de corrélation de puissances maximale est supérieure à une valeur obtenue en multipliant une valeur de corrélation de puissances supérieure des valeurs de corrélation de puissances des temporisations de chemins respectives par une valeur seuil prédéterminée.

5. Programme de commande exploitable dans un circuit démodulateur de communication mobile à accès CDMA pour affecter un signal reçu, à des temporisations de chemins prédéterminées, à des doigts, synthétiser des signaux soumis à une rétrodiffusion par les doigts, démoduler le signal synthétisé, et générer en sortie le signal démodulé, le programme de commande étant **caractérisé en ce qu'**il exécute, au moyen d'un ordinateur, les étapes ci-dessous :
une première étape consistant à spécifier des temporisations de chemins destinées à être commandées sur la base d'une différence entre des temporisations de chemins adjacents ; et
une seconde étape consistant à faire référence à un profil de retard indiquant une distribution de valeurs de corrélation de puissances relativement à un temps de retard d'un signal, à détecter une valeur de corrélation de puissances maximale entre les temporisations de chemins, et à déterminer une pertinence d'affectation des temporisations de chemins sur la base de valeurs de corrélation de puissances des temporisations de chemins respectives et de la valeur de corrélation de puissances maximale.

6. Programme de commande selon la revendication 5, caractérisé en ce qui :
la première étape comporte une étape consistant à spécifier les temporisations de chemins adjacents en qualité de temporisations de chemins à contrôler lorsque la différence entre les temporisations de chemins adjacents est inférieure à une valeur seuil prédéterminée ; et
la seconde étape comporte une étape consistant à déterminer qu'une affectation des temporisations de chemins n'est pas pertinente lorsque la valeur de corrélation de puissances maximale est supérieure à une valeur obtenue en multipliant une valeur de corrélation de puissances supérieure des valeurs de corrélation de puissances des temporisations de chemins respectives par une valeur seuil prédéterminée.
